# EUROPÄISCHE PATENTANMELDUNG

(11) **EP 2 808 196 A1**
(43) Veröffentlichungstag der Anmeldung: **03.12.2014**
(21) Anmeldenummer: 13169731.0
(22) Anmeldetag: 29.05.2013
(51) Int. Cl.: B60L 11/18, H01F 27/36, H01F 38/14, H05K 7/14, H05K 9/00, H02J 5/00, H02J 7/02

(54) **Übertragerelement**

(71) Anmelder: Brusa Elektronik AG, 9466 Sennwald (CH)
(72) Erfinder: Krause, Axel, 9650 Nesslau (CH)
(74) Vertreter: Patentbüro Paul Rosenich AG

(57) **Zusammenfassung**

Ein Übertragerelement 1, 1 a, vorzugsweise als Sekundärteil eines induktiven Ladesystems für Elektrofahrzeuge, weist eine Sekundärspule 2 und eine im Gehäuse 3 integrierte Elektronik 4 auf. Das Gehäuse 3 umfasst auch einen topfartigen Abschnitt 6 aus magnetisch abschirmendem Material mit einer offenen Seite 7.

## Beschreibung

Die Erfindung betrifft ein Übertragerelement für ein System zur kontaktlosen Energieübertragung zwischen zumindest einem Primärteil und zumindest einem Sekundärteil, nach dem Oberbegriff des Anspruchs 1, sowie ein System zur kontaktlosen Energieübertragung als auch ein Fahrzeug mit einem derartigen System.

In der WO2013/017200 ist ein elektronisches Gerät offenbart, insbesondere ein Übertragerkopf zur Versorgung des Antriebs eines zumindest teilweise elektrisch betriebenen Fahrzeuges auf Basis induktiver Energieübertragung. Dieses Gerät weist ein Gehäuse mit einer darin befindlichen Sekundärwicklung und einem integrierten Gleichrichter auf. Die Sekundärwicklung speist den Gleichrichter, der dazu elektrisch mit der Sekundärwicklung verbunden ist und aus der Sekundärwicklung versorgt wird. Die EP2572427A2 zeigt ebenfalls eine Anordnung, bei welcher eine Sekundärwicklungs-Anordnung mit einem Gleichrichter elektrisch verbunden ist, welcher damit von der Sekundärwicklungs-Anordnung gespeist wird.

Diese Dokumente zeigen das Bestreben nach Integration von elektrotechnischen und/oder elektronischen Bauteile in die Geräte-Gehäuse, in welchen auch die Sekundärspule vorgesehen ist. Dies ist jedoch nur bedingt möglich, da diese Gehäuse natürlich den starken Magnetfeldern für die Energieübertragung ausgesetzt sind. Die Integration von empfindlichen Elektronikbauteilen, wie sie für den Betrieb und die Steuerung der Sekundärseite notwendig sind, ist damit nur schwer möglich bzw. sind diese Bauteile dann sehr störanfällig.

Aufgabe der vorliegenden Erfindung ist es somit, ein Übertragerelement für ein System zur kontaktlosen Energieübertragung anzugeben, welches zur Erzielung eines möglichst optimalen Verhältnisses von übertragener Energie zu Übertragungsdauer den Einsatz starker Magnet-Wechselfelder erlaubt und dennoch einen hohen Grad der Integration von elektrischen und/oder elektronischen Bauteilen in das Gehäuse des Übertragerelementes ermöglicht.

Die Aufgabe wird durch die Merkmale des unabhängigen Anspruchs 1 gelöst. Vorteilhafte Weiterbildungen sind in den Figuren und in den abhängigen Patentansprüchen dargelegt.

Wie auch schon bei den bekannten Geräten umfasst das Übertragerelement zumindest eine Spule und eine Elektronik sowie einen Anschluss für eine Stromversorgung und/oder eine zu ladende Batterie, wobei zumindest eine Spule und die Elektronik in einem gemeinsamen Gehäuse untergebracht sind.

Gemäss der Erfindung weist das Gehäuse aber auch einen topfartigen Abschnitt aus magnetisch abschirmendem Material, vorzugsweise aus Ferrit, mit zumindest einer offenen Seite auf. Bei entsprechender räumlicher Orientierung kann dadurch eine Abschirmung der empfindlichen elektrischen und elektronischen Bauteile erreicht werden, ohne dabei die Energieübertragung zu stark zu behindern, da das Magnetfeld die den topfartigen Abschnitt vorzugsweise umgebende Spule des Übertragerelementes weiterhin durchdringen kann.

Vorteilhafterweise ist die offene Seite des Gehäuses zumindest teilweise mit einer Abdeckung aus magnetisch abschirmendem Material versehen. Eine derartige Konstruktion bietet eine weiter verbesserte Abschirmung empfindlicher Bauteile gegen starke Magnetfelder, während die Durchdringung der Spule zur Energieübertragung nicht beeinflusst ist.

Gemäss einem weiteren Ausführungsbeispiel der Erfindung ist zwischen der Abdeckung und dem Boden und/oder den Seitenwänden des topfartigen Abschnittes zumindest ein Teil der Elektronik mit Wandelementen aus magnetisch abschirmendem Material umgeben, um somit eine allseitige Abschirmung der Elektronik des Übertragerelementes zu erhalten.

Um die Energieübertragung so wenig wie möglich zu behindern, ist eine vorteilhafte Ausgestaltung der Erfindung dadurch gekennzeichnet, dass zwischen der Abdeckung und der offenen Seite des topfartigen Abschnitts des Gehäuses ein magnetisch durchlässiger Bereich verbleibt, wobei vorzugsweise zumindest eine Spule in und vorzugsweise unterhalb dieses durchlässigen Bereiches angeordnet ist.

Wenn vorteilhafterweise zumindest ein wärmeleitendes Element, vorzugsweise zumindest eine Kupferplatte, das Gehäuse mit zumindest einem der darin angeordneten Bauteile verbindet, kann trotz guter magnetischer Abschirmung die Ableitung von Wärme von den geschützten Bauteilen nach aussen gewährleistet werden.

Bei einer weiteren erfindungsgemässen Ausführungsform des Übertragerelementes weist der Innenraum des Gehäuses eine Vergussmasse auf, welche die darin enthaltenen Bauteile vorzugsweise vollständig umgibt. Damit kann die mechanische Festigkeit und die Widerstandfähigkeit gegenüber mechanischen Beanspruchungen wesentlich verbessert werden.

Vorzugsweise findet ein Übertragerelement entsprechend zumindest einem der vorhergehenden Absätze als Sekundärteil für ein System zur kontaktlosen Energieübertragung zwischen zumindest einem Primärteil und zumindest einem Sekundärteil Anwendung, insbesondere als an einem Fahrzeug angebrachter Sekundärteil zur Versorgung eines Energiespeichersystems des Fahrzeuges.

Bei einem System zur kontaktlosen Energieübertragung zwischen zumindest einem Primärteil und einem Sekundärteil, vorzugsweise einem System zum kontaktlosen Laden von zumindest teilweise elektrisch betriebenen Fahrzeugen, ist erfindungsgemäss vorgesehen, dass der Sekundärteil zumindest ein Übertragerelement nach zumindest einem der vorhergehenden Absätze aufweist.

Die Lösung der eingangs gestellten Aufgabe ist auch bei Fahrzeugen mit zumindest teilweise elektrischem Antrieb, vorzugsweise mit einer Traktionsbatterie zur Speisung des elektrischen Antriebs mit elektrischer Energie, gegeben, das den Sekundärteil eines Systems zur kontaktlosen Energieübertragung aufweist, wenn dabei der Sekundärteil zumindest ein Übertragerelement nach zumindest einem der vorhergehenden Absätze aufweist.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine erste Ausführungsform eines erfindungsgemässen Übertragerelementes in perspektivischer, teilweise geschnittener Ansicht in schematischer Darstellung,
- Fig. 2a: eine weitere Ausführungsform eines erfindungsgemässen Übertragerelementes, in einer Schnittansicht parallel zur Sekundärspule,
- Fig. 2b: die Ausführungsform der Fig. 2a in einem Längsschnitt senkrecht zur Ansicht der Fig. 2a, und
- Fig. 3: einen beispielhaften elektrotechnischen Schaltplan eines erfindungsgemässen Übertragerelementes.

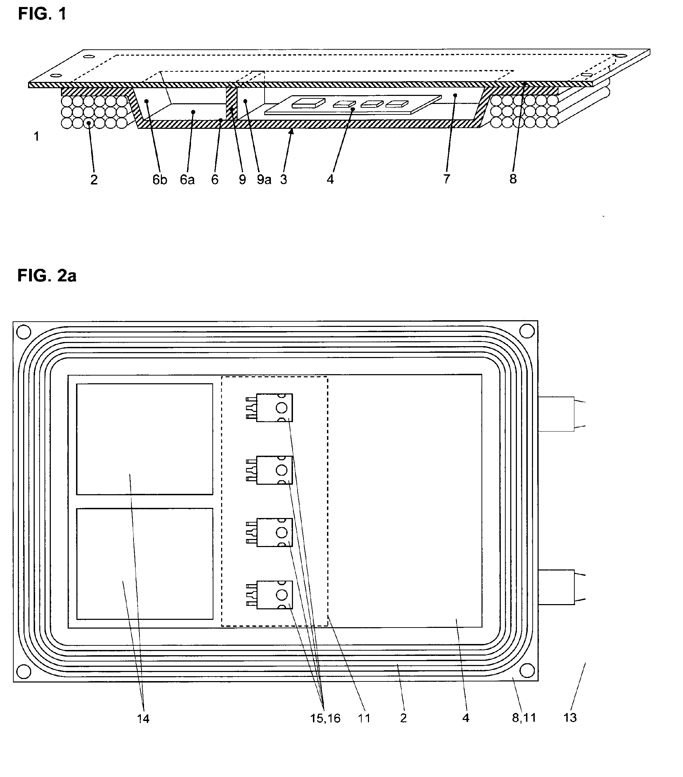

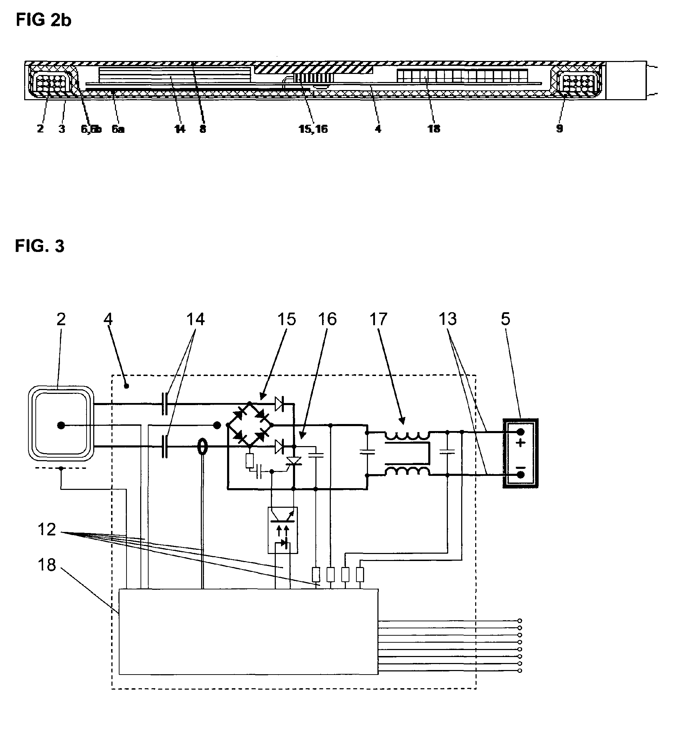

Fig. 1 zeigt eine erste Ausführungsform eines Übertragerelementes 1, vorzugsweise als Sekundärteil eines induktiven Ladesystems für Elektrofahrzeuge bzw. für zumindest teilweise elektrisch angetriebene Fahrzeuge. Das von einem Primärteil generierte magnetische Wechselfeld durchdringt zumindest eine Sekundärspule 2 und wird dann mittels einer im Gehäuse 3 des Übertragerelementes 1 integrierten Elektronik 4 in einen Ladestrom für insbesondere die Traktionsbatterie 5 (siehe dazu Fig. 3) des Fahrzeuges umgewandelt. Das Gehäuse 3 des Übertragerelementes 1 kann aus beliebigem Werkstoff bestehen, bei innerhalb des Gehäuses 3 liegender Sekundärspule 2 natürlich aus magnetisch nicht abschirmendem Material, wie beispielsweise Kunststoff.

Das Gehäuse 3 umfasst oder beinhaltet auch einen topfartigen Abschnitt 6 aus magnetisch abschirmendem Material, vorzugsweise aus Ferrit. Dieser Abschnitt 6 kann am Gehäuse 3 selbst ausgebildet oder ein separat gefertigter und mit dem Gehäuse 3 verbundener Bauteil sein. Eine Seite 7 dieses Abschnittes 6 ist offen und weist, wenn das Übertragerelement 1 bestimmungsgemäss betrieben wird, vom Primärteil weg. Damit ist die im Gehäuse 3 befindliche Elektronik 4 gegenüber dem grössten Teil des vom Primärteil generierten Magnetfeldes abgeschirmt. Zumindest eine Sekundärspule 2 umgibt vorzugsweise den topfartigen Abschnitt 6 auf dessen Aussenseite, wobei die magnetische Abschirmung durch den Ferrit-Abschnitt 6 vorteilhafterweise als Ableitung bzw. Umleitung der Magnetfeldlinien um empfindliche Bauteile herum und durch die Sekundärspule 2 hindurch wirkt.

Vorteilhafterweise ist die offene Seite 7 des Gehäuses 3 bzw. seines topfartigen Abschnittes 6 zumindest teilweise mit einer Abdeckung 8 aus ebenfalls magnetisch abschirmendem Material wie beispielsweise Ferrit, versehen. Die Abdeckung 8 überdeckt vorzugsweise eine grössere Fläche als der Abschnitt 6 - normal auf die Richtung der Magnetfeldlinien gesehen - und überragt damit sowohl diesen Abschnitt 6 als auch die Sekundärspule 2. Allenfalls kann der Rand der Abdeckung 8 auch über die Seiten der Sekundärspule 2 herumgezogen, bei Anwendung beispielsweise an der Unterseite eines Fahrzeuges insbesondere hinuntergezogen, sein, so dass durch die Abdeckung 8 eine dem topfartigen Abschnitt 6 entgegengesetzt orientierte topfartige Struktur gebildet wird.

Um die Abschirmwirkung für die Elektronik 4 des Übertragerelementes 1 zu optimieren, können zwischen der Abdeckung 8 und dem Boden 6a und/oder den Seitenwänden 6b des topfartigen Abschnittes 6 zumindest Teile der Elektronik 4 mit Wandelementen (nicht dargestellt) aus ebenfalls magnetisch abschirmendem Material, vorzugsweise Wandelementen aus Ferrit, umgeben werden.

Innerhalb der ersten Abschirmung durch den topfartigen Abschnitt 6 ist damit eine weitere Abschirmung durch die Wandelemente für die Elektronik 4 oder andere empfindliche Bauteile vorgesehen. Diese Wandelemente im Innenraum der Sekundärspule 2, typischerweise senkrecht zum Boden 6a des topfartigen Abschnittes 6 und/oder zur Abdeckung 8, ergeben zusammen mit der Abdeckung 8 und dem Abschnitt 6 eine Art magnetischen "Faraday'schen Käfig" um die elektronischen Bauteile 4 herum und wirken auch als Leiter für die Magnetfeldlinien um die Elektronik 4 herum und durch die Sekundärspule 2.

Die Sekundärspule 2 und gegebenenfalls auch der Innenraum des Gehäuses 3, vorzugsweise auch der Innenraum des topfartigen Abschnitts 6, kann zumindest teilweise mit einer Vergussmasse 9 verfüllt sein. Diese umgibt zumindest teilweise die im Gehäuse 3 enthaltenen Bauteile, vorzugsweise die Sekundärspule 2 und/oder die Elektronik 4, um sie gegen Feuchtigkeit und/oder mechanische Beanspruchungen, insbesondere Stösse oder Vibrationen im Fahrbetrieb des Elektrofahrzeuges, zu schützen.

Die Fig. 2a und 2b zeigen eine etwas andere Ausführungsform eines erfindungsgemässen Übertragerelementes 1a. Hier ist das Gehäuse 3 durch eine dünne, leichte Platte 8a aus beispielsweise Aluminium abgedeckt und nach aussen hin abgeschlossen. Im Inneren des Gehäuses 3 ist wieder eine topfartige Abschirmung 6 um die Elektronik 4, vorzugsweise aus Ferrit, vorgesehen, die an einer Seite offen ist. Über die Abdeckung 8, vorteilhafterweise aus Aluminium, Kupfer oder einem anderen gut wärmeleitenden Material angefertigt, wird die Wärme von der Elektronik 4 in die Umgebung abgeleitet und derart die Elektronik 4 gekühlt. Derartige Kühlanordnungen können bei allen erfindungsgemässen Ausführungsformen vorgesehen sein. Auch die Anschlüsse 12 für Steuer- und Sensorleitungen von und zur Elektronik 4 als auch die Anschlüsse 13 für die zu ladende Batterie 5 sind in den Fig. 2a und 2b zu sehen.

Zusätzlich zum Bereich der Sekundärspule 2 ist in den Fig. 2a und 2b auch deutlich zu erkennen, dass der Innenraum des Gehäuses 3 ebenfalls zumindest teilweise mit der Vergussmasse 9 verfüllt sein kann. Diese Vergussmasse 9 umgibt zumindest teilweise die im Gehäuse 3 enthaltenen Bauteile, vorzugsweise die Sekundärspule 2 und/oder die Elektronik 4.

Alternative Ausführungsformen können Gehäuse vorsehen, welche die Sekundärspule 2 in ihrem Inneren beinhaltet, wobei die Sekundärspule 2 durch einen Rahmen abgedeckt und vorzugsweise gekapselt ist. Auch können an der dem Innenraum des Gehäuses zugewandten Oberfläche dieses Rahmens und vorzugsweise auch zwischen den Bauteilen der Elektronik 4 dünne Platten aus Ferrit oder anderem magnetisch abschirmendem Material als Wand- und Zwischenwandelemente angeordnet sein. Diese Platten als Wandelemente können auch selbst die topfartige Abschirmung 6 um die Elektronik 4 bilden, die an einer Seite offen ist. Dabei kann vorteilhafterweise auch der an den Rahmen angrenzende Boden des Gehäuses mit Wandelementen bedeckt sein.

Die Abdeckung 8, 8a kann über Scharniere oder andere geeignet Anordnungen aufklappbar sein. Auch die Abdeckung 8, 8a gleich welcher Form kann an der Innenseite ebenfalls mit Plättchen aus magnetisch abschirmendem Material versehen sein. Die Abdeckung 8, 8a überdeckt das Gehäuse 3, den topfartigen Abschnitt 6 und auch die Sekundärspule 2 und komplettiert in zugeklapptem Zustand eine allseitige Abschirmung der Elektronik 4 im Gehäuse 3, das nach aussen hin typischerweise eine quaderförmige, vorzugsweise plattenförmige Ausgestaltung aufweist.

Die Fig. 3 zeigt schliesslich beispielhaft ein elektrisches Schaltbild eines Sekundärteils eines induktiven Energieübertragungssystems unter Verwendung eines erfindungsgemässen Übertragerelementes 1, 1a. Die im oder am Gehäuse 3, 3a angeordnete Sekundärspule 2 ist über zumindest eine Kapazität 14 mit einer Gleichrichterschaltung 15 verbunden. Daran ist eine Klemmschaltung 16 (engl. Crowbar) als Überspannungsschutz angeschlossen, weiters vorzugsweise ein Ausgangsfilter 17 und schliesslich die zu ladende Batterie 5, beispielsweise die Traktionsbatterie eines Elektrofahrzeuges. Über eine Steuereinheit 18 werden Parameter der genannten Bauteile ermittelt und deren Funktion gesteuert. Einige oder alle dieser Bauteile bilden die abgeschirmte Elektronik 4 des Übertragerelementes 1.

### Bezugszeichenliste

- 1, 1a: Übertragerelement
- 2: Sekundärspule
- 3: Gehäuse
- 4: Elektronik
- 5: Batterie
- 6: topfartiger Abschnitt
- 6a: Boden des Abschnitts 6
- 6b: Seitenwände des Abschnitts 6
- 7: offene Seite
- 8, 8a: Abdeckung
- 9: Vergussmasse
- 12: Anschlüsse für Steuer- und Sensorleitungen
- 13: Anschlüsse für Batterie 5
- 14: Kapazität
- 15: Gleichrichterschaltung
- 16: Klemmschaltung
- 17: Ausgangsfilter
- 18: Steuereinheit für Elektronik 4

## Patentansprüche

1. Übertragerelement (1, 1a) für ein System zur kontaktlosen Energieübertragung zwischen zumindest einem Primärteil und zumindest einem Sekundärteil, umfassend zumindest eine Spule (2) und eine Elektronik (4) sowie einen Anschluss (13) für eine Stromversorgung und/oder eine zu ladende Batterie (5), wobei zumindest eine Spule (2) und die Elektronik (4) in einem gemeinsamen Gehäuse (3) untergebracht sind, **dadurch gekennzeichnet, dass** das Gehäuse (3) einen topfartigen Abschnitt (6) aus magnetisch abschirmendem Material, vorzugsweise aus Ferrit, mit zumindest einer offenen Seite (7) aufweist.

2. Übertragerelement nach Anspruch 1, **dadurch gekennzeichnet, dass** die offene Seite (7) des Gehäuses (3) zumindest teilweise mit einer Abdeckung (8) aus magnetisch abschirmendem Material versehen ist.

3. Übertragerelement nach Anspruch 2, **dadurch gekennzeichnet, dass** zwischen der Abdeckung (8, 8a) und dem Boden und/oder den Seitenwänden des topfartigen Abschnittes (6) zumindest ein Teil der Elektronik (6) mit Wandelementen aus magnetisch abschirmendem Material umgeben ist.

4. Übertragerelement nach einem der Ansprüche 2 oder 3, **dadurch gekennzeichnet, dass** zwischen der Abdeckung (8, 8a) und der offenen Seite (7) des topfartigen Abschnitts (6) des Gehäuses (3) ein magnetisch durchlässiger Bereich verbleibt, wobei vorzugsweise zumindest eine Spule (2) in und vorzugsweise unterhalb dieses durchlässigen Bereiches angeordnet ist.

5. Übertragerelement nach zumindest einem der Ansprüche 1 bis 4, **dadurch gekennzeichnet, dass** zumindest ein wärmeleitendes Element, vorzugsweise Aluminium- oder Kupferplatten, das Gehäuse (3) mit zumindest einem der darin angeordneten Bauteile verbindet.

6. Übertragerelement nach zumindest einem der Ansprüche 1 bis 5, **dadurch gekennzeichnet, dass** der Innenraum des Gehäuses (3) eine Vergussmasse (9) aufweist, welche die darin enthaltenen Bauteile (z.B. 4) vorzugsweise vollständig umgibt.

7. Übertragerelement nach zumindest einem der Ansprüche 1 bis 6, als Sekundärteil für ein System zur kontaktlosen Energieübertragung zwischen zumindest einem Primärteil und zumindest einem Sekundärteil.

8. Übertragerelement nach Anspruch 7, als an einem Fahrzeug angebrachter Sekundärteil zur Versorgung eines Energiespeichersystems (5) des Fahrzeuges.

9. System zur kontaktlosen Energieübertragung zwischen zumindest einem Primärteil und einem Sekundärteil, vorzugsweise System zum kontaktlosen Laden von zumindest teilweise elektrisch betriebenen Fahrzeugen, **dadurch gekennzeichnet, dass** der Sekundärteil zumindest ein Übertragerelement (1, 1a) nach zumindest einem der Ansprüche 1 bis 8 aufweist.

10. Fahrzeug mit zumindest teilweise elektrischem Antrieb, vorzugsweise mit einer Traktionsbatterie zur Speisung des elektrischen Antriebs mit elektrischer Energie, wobei das Fahrzeug den Sekundärteil eines Systems zur kontaktlosen Energieübertragung aufweist, **dadurch gekennzeichnet, dass** das Fahrzeug einen Sekundärteil zumindest ein Übertragerelement (1, 1 a) nach zumindest einem der Ansprüche 1 bis 8 aufweist.
